Europäisches Patentamt

European Patent Office

Office européen des brevets

(11) Numéro de publication : **0 505 276 A1**

(12) **DEMANDE DE BREVET EUROPEEN**

(21) Numéro de dépôt : **92400737.0**

(22) Date de dépôt : **19.03.92**

(51) Int. Cl.⁵ : **E21B 49/00, E21B 47/10, E21B 43/26, G01V 1/40**

(30) Priorité : **20.03.91 FR 9103396**

(43) Date de publication de la demande :
**23.09.92 Bulletin 92/39**

(84) Etats contractants désignés :
**BE DE FR GB IT NL**

(71) Demandeur : **Société Française de Stockage Géologique "GEOSTOCK" (Société à responsabilité limitée)**
**7, rue E. et A. Peugeot**
**F-92563 Rueil-Malmaison Cédex (FR)**

(72) Inventeur : **Nicoletis, Serge**
**1 Villa Sisley**
**F-92500 Rueil-Malmaison (FR)**

(74) Mandataire : **Pinguet, André**
**CAPRI sàrl, 19, rue Erlanger**
**F-75016 Paris (FR)**

(54) **Sonde pour déterminer notamment l'injectivité d'un puits pétrolier et procédé de mesures la mettant en oeuvre.**

(57) Au cours des essais d'injection traditionnels menés sur des puits d'exploitation pétrolière, on s'est jusqu'ici contenté de mesurer des grandeurs hydrauliques caractéristiques du fluide injecté dans le puits (essentiellement pression, température, débit). la présente invention permet d'y adjoindre des mesures microsismiques représentatives de l'émission acoustique induite par l'injection.

Pour cela est développée une sonde constituée par un chapelet (10) de cartouches (4, 6, 8) essentiellement tubulaires, reliées entre elles par des flexibles (Fi), au moins certaines parmi lesdites cartouches (4, 6, 8) accueillant des moyens pour mesurer des grandeurs microsismiques représentatives de l'émission acoustique induite par l'injection d'un fluide dans le puits, caractérisée en ce que toutes les cartouches (4, 6, 8) présentent un diamètre suffisamment faible pour s'engager dans un tubage disposé dans le puits.

En parallèle, est proposé un procédé de mesures mettant en oeuvre cette sonde lors d'un essai d'injection comportant au moins une période (I) d'injection du fluide suivie par une période (II) de repos, le tubage du puits comportant au moins un niveau de perforations, caractérisé en ce que la sonde est descendue dans le puits, puis est immobilisée à proximité du niveau de perforations afin de mesurer au moins les grandeurs microsismiques de préférence associées à des grandeurs hydrauliques pendant au moins la période (II) de repos.

Outre une image plus fine de l'injectivité du puits, la présente invention aboutit ainsi à une procédure d'essai à la fois mieux adaptée aux besoins réels (grâce à la modularité de la sonde) et plus légère (la sonde effectuant plusieurs mesures lors d'un seul aller-retour dans le puits).

FIG.1

La présente invention a trait à une sonde pour déterminer notamment l'injectivité d'un puits dans une exploitation pétrolière. Elle se rapporte également à un procédé de mesures mettant en oeuvre une telle sonde.

Lorsque les hydrocarbures sont piégés dans les fissures et les pores d'une roche, une méthode pour exploiter le gisement correspondant consiste à forer différents puits selon un maillage adapté. Certains d'entre eux sont alors injectés d'eau ou d'un autre fluide. Ce dernier pénètre dans les fissures ainsi que dans la matrice de la roche et refoule de la sorte les hydrocarbures vers les puits restants, qui servent donc à la récupération du pétrole.

Au préalable cependant, chaque puits d'injection fait l'objet d'un essai. Celui-ci vise essentiellement à qualifier l'injectivité du puits et à mettre en évidence d'éventuels réseaux de fracturations ou de drains naturels susceptibles de court-circuiter les chemins d'écoulement intéressant l'ensemble des fissures et d'entraîner de la sorte le noyage des puits producteurs.

Au cours d'un essai traditionnel, un volume prédéterminé d'eau est introduit depuis la surface avec un débit constant, linéaire ou par créneaux. Pendant ce temps, différentes mesures sont faites dans le puits au droit de chaque niveau de perforations de son tubage. Pour l'heure sont couramment relevées des grandeurs hydrauliques telles que la pression et la température du fluide injecté ainsi que le débit au fond.

Or, afin de mieux apprécier encore les caractéristiques hydrologiques du sous-sol, on sait que l'enregistrement d'autres,grandeurs, dites microsismiques, est particulièrement utile. Jusqu'ici cependant, on les a surtout relevées sur les sites susceptibles de fournir de l'énergie géothermique. Elles sont en effet représentatives de l'émission acoustique du terrain lorsque, par suite de l'injection d'un fluide, les fissures de la roche s'ouvrent et font jouer les blocs les uns par rapport aux autres.

Par exemple, la demande de brevet GB 2 230 091 déposée en 1989 par le Secrétariat d'Etat pour l'Energie britannique enseigne une sonde développée dans ce but. Elle se compose notamment d'une cartouche de mesures comportant des capteurs genre accéléromètres ainsi qu'une cartouche de commandes contenant des systèmes hydrauliques, électroniques, etc. et relié à la cartouche de mesures par un flexible. Un ou plusieurs hydrophones sont en outre avantageusement ajoutés aux deux cartouches précédentes pour former une sorte de chapelet de tubes adapté à être descendu dans un forage.

Cette sonde recueille entre autres l'amplitude des ondes sismiques qui parviennent jusqu'au forage à chaque instant et en plusieurs endroits. L'analyse de ces mesures donne avec une précision intéressante l'endroit même où elles sont produites. On conçoit que, dans le cas de puits d'injection, cette connaissance alliée à celle de l'évolution des grandeurs hydrauliques traditionnellement enregistrées donnerait une bien meilleure idée des écoulements se développant dans le gisement. Le problème technique qui se pose alors est la mise au point d'une sonde adaptée à enregistrer en même temps des grandeurs hydrauliques et microsismiques dans un puits d'injection.

La solution selon l'invention consiste en une sonde pour déterminer notamment l'injectivité d'un puits dans une exploitation pétrolière, la sonde étant constituée par un chapelet de cartouches essentiellement tubulaires, reliées entre elles par des flexibles, au moins certaines parmi lesdites cartouches accueillant des moyens pour mesurer des grandeurs microsismiques représentatives de l'émission acoustique accompagnant l'injection d'un fluide dans le puits, caractérisée en ce qu'au moins une cartouche du chapelet, autre que celles accueillant les moyens pour mesurer les grandeurs microsismiques, accueille des moyens pour mesurer des grandeurs hydrauliques caractéristiques du fluide injecté.

Il est en effet possible de rassembler au sein d'une même cartouche tubulaire toute l'instrumentation nécessaire à la mesure d'une grandeur hydraulique. Cela vaut par exemple pour le débit qui peut être enregistré au moyen d'un débimètre à hélice. Cette cartouche peut aussi comprendre un capteur de pression ainsi qu'un thermomètre. Pour peu qu'elle soit reliée aux autres cartouches à l'aide de flexibles, sa présence ne gêne pas le fonctionnement des cartouches réalisant les mesures microsismiques. Ces dernières gardent en effet une masse en rapport avec les fréquences de résonnance voulues compte tenu de l'instrumentation, d'un côté, et de l'émission acoustique, de l'autre.

Avantageusement, toutes les cartouches présentent un diamètre suffisamment faible pour s'engager dans un tubage disposé dans le puits. Cela correspond à la vérité à une faible taille puisque le tubage des puits d'injection peut être ramené à seulement 1″11/ 16 (soit environ 42,8 mm). L'agencement en cartouches permet cependant d'obtenir cette caractéristique. On peut en effet, à volume comparable, réduire le diamètre d'une cartouche en allongeant cette dernière. Elle demeure cependant plus maniable qu'une sonde comportant tous les capteurs et qui serait par la force des choses exagérément longue (sans parler des problèmes d'obtention des fréquences de résonnance adaptées à la nature des capteurs de grandeurs microsismiques).

Par exemple, une desdites grandeurs microsismiques est la vitesse du mouvement des particules de la roche, le moyen pour la mesurer comportant un géophone. Il est alors avantageux que le moyen pour mesurer la vitesse du mouvement des particules de la roche comporte en outre une électronique de pré-amplification. De préférence, le chapelet comporte une seule cartouche accueillant le géophone, cette dernière étant munie extérieurement d'un bras dépliable en vue d'être assujettie au tubage du puits. Le bras du géophone est par exemple actionné par un moteur électrique. Le géophone peut dès lors émettre des signaux électriques selon une ou plusieurs voies, des premières liaisons électriques passant dans les flexibles pour transmettre en continu les signaux jusqu'en surface.

Par exemple, une autre desdites grandeurs microsismiques est la pression dynamique dans le fluide compris dans le puits, le moyen pour la mesurer comportant un hydrophone. Il est de même alors avantageux que le moyen pour mesurer la pression dynamique dans le fluide comporte en outre une électronique de pré-amplification. De préférence, le chapelet comporte une série d'au moins deux cartouches accueillant chacune un hydrophone et placées dans le chapelet au-dessus ou en dessous de la cartouche accueillant le géophone. Chaque hydrophone peut dès lors émettre un signal électrique, des deuxièmes liaisons électriques passant dans les flexibles pour transmettre en continu les signaux jusqu'en surface.

Avantageusement, une cartouche particulière du chapelet forme une unité de commandes munie de moyens d'assujettissement au tubage en vue d'immobiliser la sonde dans le puits. Les moyens d'assujettissement de l'unité de commandes consistent par exemple en un bras repliable. De préférence, la cartouche formant l'unité de commandes est placée dans le chapelet directement au-dessus des cartouches accueillant les moyens pour mesurer les grandeurs microsismiques et en ce qu'elle comporte supérieurement une tête de connexion pour être suspendue à un câble.

Les grandeurs hydrauliques caractéristiques du fluide injecté sont notamment sa pression, sa température et son débit. De préférence, la cartouche accueillant les moyens pour mesurer les grandeurs hydrauliques est placée dans le chapelet au-dessous des cartouches accueillant les moyens pour mesurer les grandeurs microsismiques et elle comporte inférieurement un cône de protection en cas de chute.

Enfin, les flexibles peuvent avoir une longueur viable choisie entre quelques dizaines de centimètres et quelques dizaines de mètres. Ils peuvent en effet être échangés en vue d'adapter leur longueur. Ainsi s'assure-t-on notamment d'un découplage mécanique optimal des différents moyens de mesures. Cela permet aussi de faire varier le volume de roche soumis à l'écoute sismique. En parallèle, des cartouches supplémentaires peuvent être ajoutées au chapelet (avec de nouveaux hydrophones par exemple) tandis que celles prévues à l'origine peuvent être écartées (telle la ou les cartouches accueillant les moyens pour mesurer des grandeurs hydrauliques caractéristiques du fluide injecté). En d'autres termes, par son aspect modulaire, la présente sonde fait preuve de la flexibilité nécessaire à une campagne de reconnaissances optimale.

Dès lors, il est possible de mettre en oeuvre la présente sonde de façon systèmatique sur chaque puits d'injection. Dans le cadre d'un essai d'injection comportant au moins une période d'injection du fluide suivie par une période de repos, le tubage du puits comportant au moins un niveau de perforations, la présente invention enseigne en effet un procédé caractérisé en ce que la sonde est descendue dans le puits, puis est immobilisée à proximité du niveau de perforations afin de mesurer au moins les grandeurs microsismiques pendant au moins la période de repos.

Bien qu'il s'ensuive une procédure plus sophistiquée et donc plus coûteuse, le repérage dans l'espace de la source des émissions acoustiques pour chaque puits permet de déterminer avec précision l'emplacement du ou des réseaux de fissures, lieux des écoulements principaux. Ce résultat qui va dans le sens d'une bien meilleure reconnaisance du gisement, pourrait justifier le surcoût.

Ce dernier est à la vérité en partie contre-balancé par la réduction des manoeuvres à effectuer. Puisque la présente sonde mesure à la fois les grandeurs hydrauliques et microsismiques, il suffit en effet de la descendre et de la remonter une seule fois. Jusqu'ici, certains puits réservés à la prospection recevaient tour à tour des instrumentations genre débimètre, puis des sondes comme celle divulguée par la demande britannique citée ci-dessus. Ces puits devaient par ailleurs être de diamètre plus large.

Pour cela, la sonde est par exemple descendue dans le puits alors qu'elle est suspendue à un câble, le câble étant enroulé en surface sur un tambour. Le câble peut dès lors traverser une tête de puits étanche par l'intermédiaire d'un presse-étoupe hydraulique. Il contient avantageusement des fils conducteurs électriques pour transmettre les mesures effectuées par la sonde jusqu'à une installation d'enregistrement en surface, au moins une partie des mesures étant ainsi enregistrée en continu. L'éventuel reste des mesures trouve avantage à être échantillonné pour être transmis à l'installation d'enregistrement par une seule paire desdits fils conducteurs.

Avant d'être descendue, la sonde reçoit avantageusement des flexibles dont la longueur est adaptée notamment selon le volume de massif autour du puits à explorer par la sonde. Toujours avant d'être descendue, elle reçoit aussi par exemple au moins une cartouche accueillant des moyens pour mesurer des grandeurs hydrauliques et, après sa descente dans le puits, elle est immobilisée au droit du niveau de perforations afin de mesurer aussi les grandeurs hydrauliques dans le fluide compris dans le puits pendant la période d'injection ainsi que la période de repos. Dans ce cas et si le tubage a plusieurs niveaux de perforations, la sonde est tour à tour immobilisée au droit de chaque niveau de perforations du tubage afin de mesurer au moins les grandeurs hydrauliques dans le fluide compris dans le puits pendant la période d'injection.

La présente invention va à présent être décrite plus en détail à l'aide notamment d'une forme de réalisation avantageuse de la sonde correspondante. Pour cela, il est fait référence aux dessins en annexe sur lesquels :

 – la figure 1 est une vue de côté schématique d'une sonde selon l'invention,

 – la figure 2 est un diagramme indiquant grossièrement l'évolution dans le temps des grandeurs hydrauliques dans un puits d'injection.

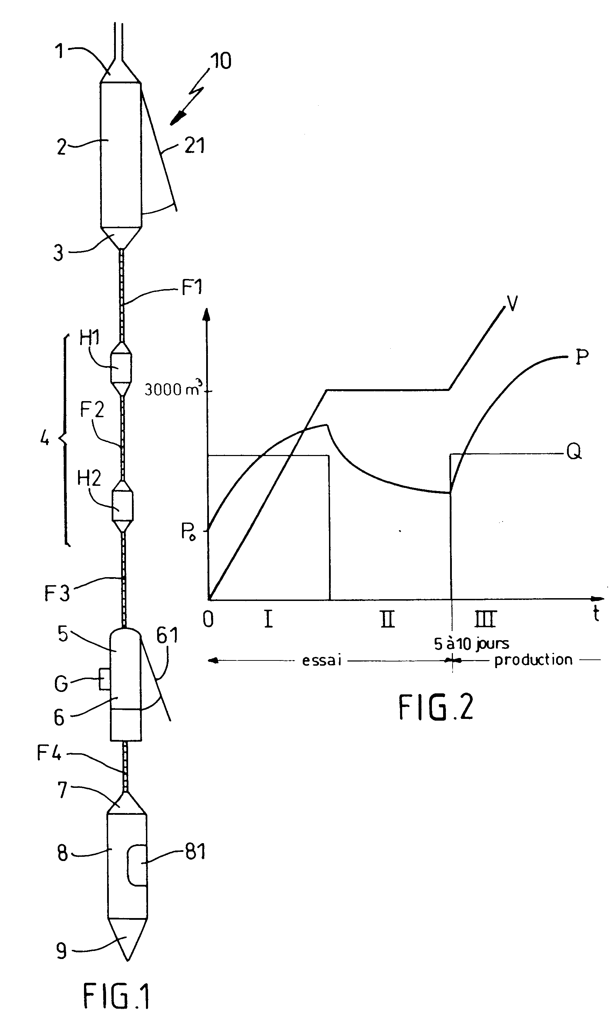

La figure 1 permet de comprendre comment une sonde selon l'invention peut être conçue. Elle se présente préférentiellement sous la forme d'un chapelet 10 de cartouches, essentiellement tubulaires et reliées entre elles bout à bout par l'intermédiaire de flexibles Fi. Dès lors, le diamètre des différentes cartouches est, de façon caractéristique de la présente invention, inférieur au diamètre intérieur du tubage des puits d'injection d'exploitations pétrolières. Plus précisément, ce diamètre intérieur valant au minimum 1″ 11/16 (soit 42,8 mm environ), les cartouches ont un encombrement inférieur à ce chiffre de façon à pouvoir être introduites au sein du tubage et y circuler librement.

Pour ce qui est de la hauteur de la sonde en revanche, aucun impératif n'existe. Non seulement, les cartouches peuvent être de longueur viable, mais cela vaut aussi pour les flexibles Fi. Ces derniers ont en effet pour rôle le découplage mécanique des différents appareils de la sonde. Par exemple, ils évitent la transmission de vibrations d'une cartouche à l'autre. On conçoit donc que, selon les cas, on ait intérêt à allonger un flexible Fi plutôt qu'un autre. En faisant varier la longueur des flexibles Fi et donc la distance séparant les cartouches, on modifie également le volume du massif autour du puits qui est exploré par la sonde et donc la profondeur d'investigation du procédé. C'est pourquoi, la présente sonde prévoit plutôt de fonctionner avec un jeu de flexibles Fi interchangeables dont les longueurs respectives seraient par exemple 1m, 3m, 10m et 20m. La hauteur complète du chapelet 10 est par conséquent susceptible de varier depuis l'ordre du mètre jusqu'à celui de la dizaine de mètres.

A une extrémité, le chapelet 10 formant la présente sonde comporte une tête 1 de connexion pour la fixation d'un câble (non représenté). Ce câble permet ainsi de suspendre la sonde dans le puits, tête 1 en haut, et de l'y faire circuler entre la surface et le fond du puits. A l'autre extrémité, le chapelet 10 se termine de préférence par un cône 9 afin de protéger la sonde en cas de chute.

Entre les deux, on trouve dans l'exemple représenté en partant du haut de la sonde :

 – une unité 2 de commandes électrique. Elle permet de recevoir des signaux transmis depuis la surface de sorte que les différentes cartouches exécutent les commandes correspondantes. Elle comprend également des moyens d'assujettissement au tubage. Pour cela, un bras 21 avantageusement porté directement par le carter de l'unité 2 est par exemple déplié. Le poids de l'ensemble du chapelet 10 peut être ainsi repris si bien que le câble s'en trouve totalement déchargé. Bien entendu, le bras 21 est prévu pour être replié lors notamment de la remontée de la sonde ;

 – une série 4 de cartouches contenant chacune un hydrophone Hi. Ce sont des transducteurs qui mesurent les variations de la pression du fluide se trouvant dans le puits (pression dynamique). Ils sont compensés afin de fonctionner aux grandes valeurs de pression hydrostatiques et de température apparaissant aux profondeurs mises en cause en application pétrolière. De ce point de vue, 300 bars et 150°C semblent des minimums. L'exemple de la figure 1 en montre deux, H1 et H2, mais il pourrait y en avoir davantage (trois notamment). Il est par ailleurs avantageux de prévoir une électronique 3 de pré-amplification de leurs signaux. Le gain est alors de préférence de 48dB minimum, éventuellement programmable. Les cartes électroniques nécessaires (une par hydrophone généralement) sont par exemple logées dans la partie inférieure de l'unité 2 de commandes, étant entendu que les flexibles Fi comportent intérieurement les liaisons électriques nécessaires à la transmission des signaux provenant de chacun des hydrophones.

 – une cartouche 6 comportant un géophone G. Ce dernier appareil n'est autre qu'un vélocimètre. Lorsqu'il est mis en contact suffisamment étroit avec la roche hôte du gisement pétrolier, il mesure en effet la vitesse du mouvement des particules qui la forment. Celle-ci , encore appelée vitesse de déplacement est, au même titre que la pression dynamique mesurée par les hydrophones, une grandeur microsismique représentative de l'émission acoustique induite par l'injection.

Afin de bien appliquer le géophone G à la paroi du puits, il est avantageux de munir également la cartouche 6 d'un bras 61 dépliable permettant de l'assujettir à la paroi du tubage. Ce bras 61 est de préférence actionné par un moteur électrique. Il s'ensuit qu'en fonctionnement, la sonde est liée rigidement au terrain en deux points au moins (au niveau de l'unité 2 de commandes et de la cartouche 6). La présence des flexibles $F_1$, $F_2$, et $F_3$ de la série 4 évite alors l'apparition de contraintes de torsion qui auraient notamment pour effet néfaste de fausser les mesures du géophone G.

Dans une forme de réalisation préférée, le géophone G est à trois voies. Les signaux de chacune des voies trouvent avantage à être pré-amplifiés au fond comme ceux des hydrophones. Une électronique 5 peut être en conséquence intégrée à la cartouche 6.

– une cartouche 8 de mesures hydrauliques. Ces dernières se rapportent avantageusement à la fois à la pression du fluide se trouvant dans le puits (pression statique), à sa température ainsi qu'à son débit. Cependant il reste concevable dans le cadre de la présente invention qu'une seule de ces mesures soit effectuée. Quoi qu'il en soit, la cartouche 8 qui reçoit les appareils de mesures correspondants (capteur de pression, thermomètre ou débimètre 81, à hélice notamment) est de préférence placée tout en bas de la sonde afin de pouvoir être positionnée au droit des perforations du tubage les plus profondes.

Dans une variante de réalisation, cette cartouche 8 peut aussi comprendre un appareil de mesures utilisant de façon connue les rayons y pour déterminer la profondeur de la sonde en liaison avec le résultat de diagraphies annexes. La sonde qui vient ainsi d'être décrite, se présente à la vérité sous sa forme complète, qui prévoit donc des appareils pour mesurer aussi bien des grandeurs microsismiques que des grandeurs hydrauliques. Dans le cadre de la présente invention, une utilisation modulaire est cependant envisagée, un nombre quelconque des cartouches évoquées plus haut étant alors absentes du chapelet 10. Cela vaut surtout pour la dernière cartouche 8 de mesures hydrauliques qui peut également être employée à part dans le cadre d'une campagne par conséquent plus traditionnelle. Sa compatibilité avec les appareils de mesures microsismiques ainsi que son aspect multi-fonction la rendent toutefois différente des sondes utilisées d'ordinaire.

Par l'intermédiaire du câble mentionné en commençant et qui a ainsi un rôle non seulement mécanique, mais aussi électrique, les différents appareils de mesures peuvent transmettre leurs signaux respectifs à une installation d'enregistrement en surface. De façon standard, on prévoit plutôt sept fils conducteurs par câble. Cinq d'entre eux sont alors réservés aux mesures microsismiques : une par hydrophone et trois pour le géophone trois voies. Les grandeurs correspondantes sont ainsi scrutées en continu. Les conducteurs restants peuvent servir à transmettre les mesures hydrauliques (pression, température et débit). Elles sont alors plutôt échantillonnées, par exemple toutes les deux secondes, les valeurs échantillonnées de chaque grandeur étant de la sorte "remontées" à tour de rôle par une seule paire de fils conducteurs. Toutefois, bien d'autres solutions de télémétrie sont envisageables dans le cadre de la présente invention.

Le câble traverse la tête de puits, qui est fermée, de préférence grâce à un presse-étoupe hydraulique.

Ce dernier est prévu pour résister à des surpressions pouvant atteindre au minimum 100 bars. Afin de mieux garantir l'étanchéité au niveau du presse-étoupe, un câble lisse est préféré. Il est par exemple enroulé sur un tambour.

Quant à l'installation d'enregistrement, elle est avantageusement numérique et comporte des dispositifs de détection, de sauvegarde et d'interprêtation des signaux.

C'est ainsi qu'en actionnant le tambour, la sonde qui vient d'être décrite peut être descendue au sein d'un puits d'injection tubé en vue de recueillir diverses mesures au cours de l'essai préliminaire du puits. Cet essai consiste généralement en au moins un cycle d'injection suivi d'une période de repos. Ce cycle, qui dure au total de cinq à dix jours, est reporté sur le schéma de la figure 2. Il correspond donc à une première période I au cours de laquelle de l'eau notamment est injectée à un débit Q constant en surface jusqu'à concurrence d'un volume V total égal par exemple à 3000 m³. La pression P dans le puits s'accroît alors depuis la pression hydrostatique Po correspondant à la profondeur de la mesure. Puis, l'injection est stoppée (le débit Q retombant à 0) et on observe la chute consécutive de la pression P dans le puits. C'est la période II dite de "fall-off". Après ce cycle, l'injection en vue de l'exploitation proprement dite du site démarre à moins qu'un autre cycle d'essai ne soit jugé nécessaire (période III).

La présente sonde n'est pas mise en oeuvre de la même façon selon que l'on se trouve en période I d'injection ou en période II de "fall-off" du cycle d'essai. Dans le premier cas en effet, on fait circuler la sonde dans le puits suspendue à son câble en actionnant le tambour. On positionne sa cartouche 8 de mesures hydrauliques tour à tour au droit des différents niveaux de perforations du tubage de sorte que l'hélice du débimètre 81 soit bien entraînée par les écoulements correspondants. La cartouche 8 éventuellement livre en même temps la pression et la température de l'eau injectée.

Dans le cas de la période II, la sonde demeure assujettie au puits grâce au bras 21 de sorte que le câble n'a plus à être tendu. C'est alors que l'essentiel des grandeurs microsismiques sont récupérées. En effet, elles ne sont plus perturbées par l'écoulement important instauré en période I d'injection. Durant les quelques jours que dure cette période II, la sonde peut être positionnée successivement au droit de plusieurs niveaux de perforations du tubage. La cartouche 8 sert toujours à la mesure de la pression et de la température associées.

Lors de la reprise de l'injection (période III), des mesures de débit peuvent être à nouveau menées grâce à la cartouche 8 comme on vient de le voir en période I. Grâce à ces relevés effectués par conséquent non seulement au droit de chaque niveau de perforations du tubage, mais tout au long des cycles d'essai, il est à l'heure actuelle, possible d'obtenir une image relativement précise de l'injectivité du puits. En plus de la perméabilité et de l'état de la paroi du puits déduits de façon traditionnelle des grandeurs hydrauliques, des théories scientifiques ont en effet été développées pour interpréter les mesures conjointes fournies par le géophone et les hydrophones (sous réserve de certaines hypothèses). Elles permettent entre autres de déduire quel est le réseau de fissures de la roche hôte qui est activé par l'injection, quel plan dans ce réseau est le lieu des écoulements principaux et selon quel mécanisme ils ont lieu.

On notera que toutes ces informations sont obtenues par la mise en oeuvre d'une sonde, certes relativement sophistiquée et donc onéreuse, mais selon une procédure plus économique que celle utilisée traditionnellement. La sonde effectue en effet un seul aller et retour à l'intérieur du puits, évitant ainsi la multiplication, avec les mesures, des manoeuvres de mise en place et d'extraction d'appareils mono-fonction. La durée d'un cycle d'essai peut pour la même raison être réduite de sorte que la mise en service du puits est avancée d'autant. Cela se traduit en journées d'exploitation du gisement supplémentaires et donc en une production accrue. La modularité de la sonde faite de cartouches et de flexibles interchangeables autorise par ailleurs une adaptation optimum à la campagne de reconnaissances envisagée. Enfin, tous les puits d'injection sont susceptibles de donner de la sorte une image plus précise des caractéristiques hydrauliques de la roche hôte à leurs abords. Au total, le degré de connaissance du gisement qui est atteint, est considérablement plus fin que celui livré par les campagnes d'essai habituelles qui ne comprennent généralement pas les mesures très poussées, autorisées par la présente sonde. On conçoit que, de même, cette sonde convienne pour déterminer la productivité d'un puits.

**Revendications**

1.- Sonde pour déterminer notamment l'injectivité d'un puits dans une exploitation pétrolière, la sonde étant constituée par un chapelet (10) de cartouches (4, 6, 8) essentiellement tubulaires, reliées entre elles par des flexibles (Fi), au moins certaines parmi lesdites cartouches (4, 6, 8) accueillant des moyens pour mesurer des grandeurs microsismiques représentatives de l'émission acoustique accompagnant l'injection d'un fluide dans le puits, caractérisée en ce qu'au moins une cartouche (8) du chapelet (10), autre que celles (4, 6) accueillant les moyens pour mesurer les grandeurs microsismiques, accueille des moyens pour mesurer des grandeurs hydrauliques caractéristiques du fluide injecté.

2.- Sonde selon la revendication 1, caractérisée en ce que toutes les cartouches (4, 6, 8) présentent un diamètre suffisamment faible pour s'engager dans un tubage disposé dans le puits.

3.- Sonde selon la revendication 2, caractérisée en ce que le diamètre des cartouches (4, 6, 8) est inférieur ou égal à 1″ 11/16 (soit environ 42,8 mm).

4.- Sonde selon l'une quelconque des revendications 1 à 3, caractérisée en ce qu'une desdites grandeurs microsismiques est la vitesse du mouvement des particules de la roche, le moyen pour la mesurer comportant un géophone (G).

5.- Sonde selon la revendication 4, caractérisée en ce que le moyen pour mesurer la vitesse du mouvement des particules de la roche comporte en outre une électronique (5) de pré-amplification.

6.- Sonde selon la revendication 4 ou la revendication 5, caractérisée en ce que le chapelet (10) comporte une seule cartouche (6) accueillant le géophone (G), cette dernière étant munie extérieurement d'un bras (61) dépliable en vue d'être assujettie au tubage du puits.

7.- Sonde selon la revendication 6, caractérisée en ce que le bras (61) du géophone (G) est actionné par un moteur électrique.

8.- Sonde selon l'une quelconque des revendications 4 à 7, caractérisée en ce que le géophone (G) émet des signaux électriques selon une ou plusieurs voies, des premières liaisons électriques passant dans les flexibles (Fi) pour transmettre en continu les signaux jusqu'en surface.

9.- Sonde selon l'une quelconque des revendications 4 à 8, caractérisée en ce qu'une autre desdites grandeurs microsismiques est la pression dynamique dans le fluide compris dans le puits, le moyen pour la mesurer comportant un hydrophone (H).

10.- Sonde selon la revendication 9, caractérisée en ce que le moyen pour mesurer la pression dynamique dans le fluide comporte en outre une électronique (3) de pré-amplification.

11.- Sonde selon la revendication 9 ou la revendication 10, caractérisée en ce que la chapelet (10) comporte une série (4) d'au moins deux cartouches accueillant chacune un hydrophone (H) et placées dans le chapelet (10) au-dessus ou en-dessous de la cartouche (6) accueillant le géophone (G).

12.- Sonde selon la revendication 11, caractérisée en ce que chaque hydrophone (H) émet un signal électrique, des deuxièmes liaisons électriques passant dans les flexibles (Fi) pour transmettre en continu les signaux jusqu'en surface.

13.- Sonde selon l'une quelconque des revendications 1 à 12, caractérisée en ce qu'une cartouche particulière du chapelet (10) forme une unité (2) de commandes munie de moyens d'assujettissement au tubage en vue d'immobiliser la sonde dans le puits.

14.- Sonde selon la revendication 13, caractérisée en ce que les moyens d'assujettissement de l'unité (2) de commandes consistent en un bras (21) repliable.

**15.-** Sonde selon l'une quelconque des revendications 13 ou 14, caractérisée en ce que la cartouche formant l'unité (2) de commandes est placée dans le chapelet (10) directement au-dessus des cartouches (4, 6) accueillant les moyens pour mesurer les grandeurs microsismiques et en ce qu'elle comporte supérieurement une tête (1) de connexion pour être suspendue à un câble.

**16.-** Sonde selon l'une quelconque des revendications 1 à 15, caractérisée en ce que les grandeurs hydrauliques caractéristiques du fluide injecté sont sa pression, sa température et/ou son débit.

**17.-** Sonde selon l'une quelconque des revendications 1 à 16, caractérisée en ce que ladite au moins une cartouche (8) accueillant les moyens pour mesurer les grandeurs hydrauliques est placée dans le chapelet (10) au-dessous des cartouches (4, 6) accueillant les moyens pour mesurer les grandeurs microsismiques et en ce qu'elle comporte inférieurement un cône (9) de protection en cas de chute.

**18.-** Sonde selon l'une quelconque des revendications 1 à 17, caractérisée en ce que les flexibles (Fi) ont une longueur variable, choisie entre quelques dizaines de centimètres et quelques dizaines de mètres.

**19.-** Procédé de mesures mettant en oeuvre une sonde selon l'une quelconque des revendications 1 à 18 lors d'un essai d'injection comportant au moins une période (I) d'injection du fluide suivie par une période (II) de repos, le tubage du puits comportant au moins un niveau de perforations, caractérisé en ce que la sonde est descendue dans le puits, puis est immobilisée à proximité du niveau de perforations afin de mesurer au moins les grandeurs microsismiques pendant au moins la période (II) de repos.

**20.-** Procédé selon la revendication 19, caractérisé en ce que la sonde est descendue dans le puits au début de la période (I) d'injection et n'est remontée qu'à l'issue de l'essai d'injection.

**21.-** Procédé selon la revendication 19 ou la revendication 20, caractérisé en ce que la sonde est descendue dans le puits alors qu'elle est suspendue à un câble, le câble étant enroulé en surface sur un tambour.

**22.-** Procédé selon la revendication 21, caractérisé en ce que le câble traverse une tête de puits étanche par l'intermédiaire d'un presse-étoupe hydraulique.

**23.-** Procédé selon l'une quelconque des revendications 21 à 22, caractérisé en ce que le câble contient des fils conducteurs électriques pour transmettre les mesures effectuées par la sonde jusqu'à une installation d'enregistrement en surface, au moins une partie des mesures étant ainsi enregistrée en continu.

**24.-** Procédé selon la revendication 23, caractérisé en ce que l'éventuel reste des mesures est échantillonné pour être transmis à l'installation d'enregistrement par une seule paire desdits fils conducteurs.

**25.-** Procédé selon l'une quelconque des revendications 19 à 24, caractérisé en ce qu'avant d'être descendue, la sonde reçoit des flexibles (Fi) dont la longueur est adaptée notamment selon le volume de massif autour du puits à explorer par la sonde.

**26.-** Procédé selon l'une quelconque des revendications 19 à 25, caractérisé en ce qu'avant d'être descendue, la sonde reçoit aussi au moins une cartouche (8) accueillant des moyens pour mesurer des grandeurs hydrauliques et en ce qu'après sa descente dans le puits, elle est immobilisée au droit du niveau de perforations afin de mesurer aussi les grandeurs hydrauliques dans le fluide compris dans le puits pendant la période (r) d'injection ainsi que la période (II) de repos.

**27.-** Procédé selon la revendication 26, le tubage ayant plusieurs niveaux de perforations, caractérisé en ce que la sonde est tour à tour immobilisée au droit de chaque niveau de perforations du tubage afin de mesurer au moins les grandeurs hydrauliques dans le fluide compris dans le puits pendant la période (I) d'injection.

FIG.1

FIG.2

Office européen
des brevets

## RAPPORT DE RECHERCHE EUROPEENNE

Numero de la demande

EP    92 40 0737

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A,D | GB-A-2 230 091 (THE SECRETARY OF STATE FOR ENERGY, UNITED KINGDOM)<br><br>* page 1, ligne 25 - ligne 34 *<br>* page 3, ligne 18 - ligne 33 *<br>* page 8, ligne 25 - page 11, ligne 6; figures 1,2,4 *<br><br>--- | 1-5,<br>8-13,<br>19-21,23 | E21B49/00<br>E21B47/10<br>E21B43/26<br>G01V1/40 |
| A | GB-A-2 226 408 (GAS RESEARCH INSTITUTE)<br><br>* page 7, ligne 1 - page 8, ligne 2 *<br>* page 9, ligne 14 - page 10, ligne 5; figures 1,3 *<br><br>--- | 1,2,4-6,<br>8-13,<br>19-21,23 | |
| A | US-A-4 442 895 (LAGUS ET AL.)<br><br>* colonne 1, ligne 33 - ligne 61; figure 1 *<br><br>--- | 1,16,19,<br>26,27 | |
| A | US-A-4 995 014 (HOORNSTRA)<br>* colonne 1, ligne 58 - ligne 61 *<br>* colonne 2, ligne 23 - ligne 39 *<br>* colonne 3, ligne 2 - ligne 7; figures 1,2,6 *<br><br>--- | 3,9,10 | **DOMAINES TECHNIQUES RECHERCHES (Int. Cl.5)**<br><br>E21B<br>G01V |
| A | FR-A-2 564 599 (INSTITUT FRANCAIS DU PETROLE)<br><br>* page 3, ligne 31 - page 5, ligne 14; figure 1 *<br><br>--- | 6,7,<br>13-15 | |
| A | US-A-2 757 355 (HOWES)<br>* colonne 3, ligne 8 - ligne 42; figure 1 *<br><br>----- | 1,18,25 | |

Le présent rapport a été établi pour toutes les revendications

| Lieu de la recherche | Date d'achèvement de la recherche | Examinateur |
|---|---|---|
| LA HAYE | 15 JUIN 1992 | LINGUA D.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P0402)